# EUROPÄISCHE PATENTSCHRIFT

(11) **EP 4 671 091 B1**
(45) Veröffentlichungstag und Bekanntmachung des Hinweises auf die Patenterteilung: **16.09.2026**
(21) Anmeldenummer: 24185155.9
(22) Anmeldetag: 27.06.2024
(51) Int. Cl.: B62D 1/187

(54) **ANORDNUNG ZUR SPALTABDECKUNG**
ARRANGEMENT FOR GAP COVERING
DISPOSITIF DE RECOUVREMENT D'ENTREFER

(43) Veröffentlichungstag der Anmeldung: 31.12.2025
(73) Patentinhaber: Ford Global Technologies, LLC, Dearborn, MI 48126 (US)
(72) Erfinder: Kerschbaum, Max, 50226 Frechen (DE); Costa, Bruno, 50226 Frechen (DE)
(74) Vertreter: Markowitz, Markus

(56) Entgegenhaltungen:
- EP-A2- 1 400 432
- DE-C1- 4 337 721
- US-A1- 2009 033 083

## Beschreibung

Die Erfindung betrifft eine Anordnung zur Spaltabdeckung eines veränderlichen Spaltes zwischen einer verstellbaren Lenksäule und einem Armaturenbrett eines Fahrzeugs mit einer Lenksäulenverkleidung und einer Spaltabdeckungseinrichtung mit den Merkmalen des Oberbegriffs des Anspruchs 1.

Eine Fahrzeuginnenstruktur gemäß der US 2009 / 033 083 A1 umfasst eine Abdeckung. Die Abdeckung besteht aus zwei Befestigungselementen und ist über einer Säulenabdeckung angeordnet. Ein Befestigungselement ist an einer Instrumententafel und ein weiteres an einer Säulenabdeckung befestigt. Die Abdeckung dichtet den Spalt zwischen Instrumententafel und Säulenabdeckung ab. Die Abdeckung umfasst ein flexibles Hauptelement und zwei Halterungen. Das Hauptelement umfasst zwei Befestigungsbereiche und einen Zwischenbereich, der die Befestigungsbereiche verbindet. Die Halterungen sind an den Befestigungsbereichen befestigt und bilden so die jeweiligen Befestigungselemente.

Eine flexible Spaltabdeckung zwischen einer verstellbaren Lenksäule eines Kraftfahrzeugs und einer Armaturentafel gemäß der EP 1 400 432 A2 ist einerseits an der Lenksäulenverkleidung und andererseits an der Armaturentafel befestigt. Eine flexible Spaltabdeckung soll dadurch geschaffen werden, dass die flexible Spaltabdeckung ein oberes Abdeckteil und ein unteres Abdeckteil umfasst, wobei das obere Abdeckteil aus zwei übereinanderliegend angeordneten Teilen besteht, die in einem gemeinsamen überlappenden Bereich fest miteinander verbunden, beispielsweise vernäht oder verklebt sind und wobei am überlappenden Bereich auf der dem Fahrgastraum abgekehrten Seite zumindest ein Zugelement angreift.

Die DE 43 37 721 C1 offenbart eine Spaltabdeckung an einer verstellbaren Lenksäule eines Kraftfahrzeugs, mit einem biegsamen Abdeckelement für den veränderlichen Spalt zwischen der Lenksäule bzw. einem damit verbundenen Verkleidungsteil und einer gegenüberliegenden Wand eines Armaturenträgers. Das im mittleren Bereich eine Schleife bildende Abdeckelement ist an einem Endbereich mit der Lenksäule bzw. mit dem Verkleidungsteil und am anderen Endbereich mit der Wand des Armaturenträgers verbunden. Die Schleife des Abdeckelements ist innerhalb des Spalts gebildet und zumindest bereichsweise zu dem Fahrzeuglenker hin konkav gekrümmt.

Ein Fahrzeug weist in der Regel ein Armaturenbrett und eine verstellbare Lenksäule auf, wobei die Lenksäule, bzw. das daran angeordnete Lenkrad durch Verstellen der Lenksäule an die Körpergröße und die individuelle Sitzposition des jeweiligen Fahrzeugführers einstellbar ist. Dabei wird ein Abstand zwischen dem Armaturenbrett und dem an der Lenksäule angeordneten Lenkrad verringert oder vergrößert. Wird die Lenksäule verschwenkt, wird ein Neigungswinkel zwischen der Lenksäule und einem Boden einer Karosserie des Fahrzeugs verändert. In der Regel ist die Lenksäule mit einer insbesondere mehrteiligen Lenksäulenverkleidung versehen. Die Lenksäulenverkleidung ist dabei mit der Lenksäule mitverschiebbar beziehungsweise mitschwenkbar. Dabei ist daran gedacht, dass sich die Lenksäulenverkleidung bei einer Drehung der Lenksäule nicht mit der Lenksäule mit dreht. Bekannterweise ragen die Lenksäule und die Lenksäulenverkleidung durch eine Aussparung des Armaturenbretts hindurch, wobei die Aussparung größer ist als die Lenksäulenverkleidung. Insofern ist zwischen dem Armaturenbrett und der Lenksäulenverkleidung ein Spalt gebildet. Dieser Spalt wird in der Regel zumindest abschnittsweise durch ein flexibles Spaltabdeckelement abgedeckt, also quasi verschlossen. Weil das Spaltabdeckelement flexibel ausgebildet ist, können Verschiebungen und/oder Verschwenkungen der Lenksäulenverkleidung relativ zu dem Armaturenbrett durch das Spaltabdeckelement ausgeglichen werden. Das Spaltabdeckelement kann flächig ausgeführt sein und ist in der Regel stoffschlüssig mit der Lenksäulenverkleidung verbunden. Dabei wird das Spaltabdeckelement entweder mittels eines Schweißverfahrens, beispielsweise mittels Ultraschallschweißens mit der Lenksäulenverkleidung verbunden oder mittels Klebstoffe. Beide Möglichkeiten erhöhen die Kosten und die Komplexität des Montageprozesses deutlich. Insbesondere der Einsatz der Ultraschallschweißanlage mit speziellem Werkzeug oder auch der Einsatz von an unterschiedlichen Umwelteinflüssen angepassten Klebstoffen wirken sich hier nachteilig aus. Weiter ist der Materialverbrauch als nachteilig anzusehen, da bei den konventionellen Verbindungsprozessen stets Materialüberschuss vorhanden sein muss, welcher nach der Herstellung der notwendigen Verbindung durch Ultraschallschweißen oder Kleben entsorgt werden muss, wobei dieser Verschnitt dann unter Umständen auch zum Schutz der Umwelt mit großem Aufwand entsorgt werden muss, ohne dass eine andere Nutzung möglich wäre, da möglicherweise Klebstoffrückstände anhaften oder ungerade Schnittkanten erscheinen.

Angesichts der aufgezeigten Problematik bietet der Bereich der Spaltabdeckung in Fahrzeugen, insbesondere die Befestigung des Spaltabdeckelementes noch Raum für Verbesserungen.

Der Erfindung liegt die Aufgabe zugrunde, eine Anordnung zur Spaltabdeckung der eingangs genannten Art anzugeben, bei welcher die oben Nachteile vermieden sind, wobei eine hinsichtlich reduziertem Werkzeugeinsatz kostengünstige Möglichkeit zur Festlegung des Spaltabdeckelementes bei möglichst geringem Materialverbrauch bereitgestellt werden soll.

Erfindungsgemäß wird die Aufgabe durch eine Anordnung mit den Merkmalen des Anspruchs 1 gelöst, wobei die Unteransprüche vorteilhafte Ausgestaltungen der Erfindung betreffen.

Aufgezeigt wird eine Anordnung zur Spaltabdeckung eines veränderlichen Spaltes zwischen einer verstellbaren Lenksäule und einem Armaturenbrett eines Fahrzeugs mit einer Lenksäulenverkleidung und einer Spaltabdeckungseinrichtung. Die Spaltabdeckungseinrichtung weist eine Halteeinrichtung und ein flexibles Spaltabdeckelement auf, welches einerseits kraftformschlüssig an der Halteeinrichtung lösbar befestigt ist und andererseits mit einem Befestigungselement verbindbar ist, wobei die Halteeinrichtung mit dem daran angebundenen flexiblen Spaltabdeckelement ihrerseits kraftformschlüssig mit der Lenksäulenverkleidung lösbar befestigt ist. Gemäß der Erfindung ist das flexible Spaltabdeckelement als viereckiges Flachelement ausgeführt, an deren einer Seite ein Halteeinrichtungsflügel, dazu gegenüberliegend an der anderen Seite ein Befestigungsflügel sowie an den dazwischen angeordneten freien Seiten Klappflügel angeordnet sind.

Es ist darauf hinzuweisen, dass die in der nachfolgenden Beschreibung einzeln aufgeführten Merkmale sowie Maßnahmen in beliebiger, technisch sinnvoller Weise miteinander kombiniert werden können und weitere Ausgestaltungen der Erfindung aufzeigen. Die Beschreibung charakterisiert und spezifiziert die Erfindung insbesondere im Zusammenhang mit den Figuren zusätzlich.

Durch die Erfindung wird eine verbesserte Anordnung zur Spaltabdeckung eines veränderlichen Spaltes zwischen einer verstellbaren Lenksäule und einem Armaturenbrett eines Fahrzeugs mit einer Lenksäulenverkleidung und einer Spaltabdeckungseinrichtung bereitgestellt, bei welcher ohne Einsatz spezieller Werkzeuge und ohne Ultraschallschweißen oder Kleben eine hinreichende Verbindung des flexiblem Spaltabdeckelementes zur Lenksäulenverkleidung erreicht wird. Diese Verbindung ist günstiger Weise aber wieder lösbar, so dass die Lenksäulenverkleidung jederzeit von dem Spaltabdeckelement getrennt werden kann, wenn dies notwendig erscheint. Insofern bezieht sich der Begriff "kraftformschlüssig" auf eine Verbindung zweier Verbindungspartner, die zusammengefügt werden und in diesem zusammengefügten Zustand verbleiben, bis die Verbindung zu einem gewünschten Zeitpunkt wieder getrennt wird, ohne dass das Spaltabdeckelement oder die Halteeinrichtung zerstört würde.

Dabei bezieht sich der Begriff "Fahrzeug" im engeren Sinne auf ein Straßenfahrzeug, also ein für den Straßenverkehr geeignetes und zugelassenes Fahrzeug. Insbesondere kann es sich um einen Pkw, einen Lkw, einen Van oder einen Bus handeln. Hinsichtlich des Antriebs des Fahrzeugs bestehen keinerlei Einschränkungen, es kann z.B. durch einen Verbrennungsmotor angetrieben sein, der als Brennstoff Benzin, Diesel, LPG, Wasserstoff oder ein anderes Gas verwendet. Alternativ oder zusätzlich kann ein Elektromotor vorgesehen sein, der z.B. durch eine Batterieeinheit und/oder eine Brennstoffzelle mit Energie versorgt werden kann. Das Fahrzeug kann wenigstens zeitweise durch einen Fahrer steuerbar sein. Es kann allerdings auch dazu eingerichtet sein, wenigstens zeitweise autonom zu fahren, also ohne Steuerung durch einen Fahrer.

In bevorzugter Ausgestaltung kann vorgesehen sein, dass die Halteeinrichtung als U-förmiger Rahmen mit einem Basissteg und zwei sich gleichorientiert davon wegerstreckenden U-Schenkeln ausgeführt ist. Insbesondere sind Basisschenkel und U-Schenkel rechteckig ausgeführt. Rechteckig meint im Sinne der Erfindung, dass der Basissteg und die jeweiligen Schenkel länger als hoch und höher als dick sind. Insbesondere ist der Basissteg als Flachsteg ausgeführt, wobei der jeweilige U-Schenkel senkrecht dazu angeordnet als Hochsteg ausgeführt ist. An dem Basissteg ist so endseitig jeweils ein U-Schenkel hochkant angeordnet ist. So wird eine besonders stabile Halteeinrichtung zur Verfügung gestellt. Natürlich kann die Halteeinrichtung auch andere Ausgestaltungen als die bevorzugt U-förmige aufweisen. Beispielsweise könne diese rechteckig oder quadratisch ausgeführt sein.

In zweckmäßiger Ausgestaltung ist die Halteeinrichtung einstückig hergestellt. Insbesondere kann die Halteeinrichtung als Spritzgussteil aus einem geeigneten Kunststoff gefertigt werden. Natürlich kann auch vorgesehen sein, das Basissteg und U-Schenkel als separate Teile hergestellt und anschließend miteinander verbunden werden. Anstelle eines Kunststoffs kann selbstverständlich jeder geeignete Werkstoff zur Herstellung der Halteeinrichtung Verwendung finden, wobei auch für den jeweiligen Werkstoff geeignete Herstellungsverfahren Anwendung finden können.

Zur kraftformschlüssigen, also lösbaren Befestigung des flexiblen Spaltabdeckelementes an der Halteeinrichtung weist diese Halteelemente auf, welche sowohl an dem Basissteg als auch an den U-Schenkeln von diesen abstehend angeordnet sind. Günstig im Sinne Erfindung ist, wenn die Halteelemente unterschiedlich ausgeführt sind, wobei bevorzugt an dem Basissteg jeweils Paare identischer Halteelemente angeordnet sein können, wobei das jeweilige Halteelement eines Paares von Halteelementen gleich beabstandet zu einer Mittellinie der Halteeinrichtung angeordnet sind. Ein mittiges Paar an Halteelementen, weist jeweils Halteelemente auf, die jeweils aus zwei zueinander in Erstreckungsrichtung des Basisstegs beabstandeten und parallel verlaufenden, aber senkrecht zur Erstreckungsrichtung angeordneten Stegen gebildet sind. Erstreckungsrichtung des Basisstegs meint, dass sich dieser zwischen den beiden U-Schenkeln erstreckt. Man könnte auch Mittelachse des Basisstegs sagen.

Ein etwas weiter außerhalb zur Mittellinie angeordnetes Paar an Halteelementen weist Halteelemente auf, die als kreuzförmige Erhebung ausgebildet sind, die höher ausgeführt sind als das jeweilige Halteelement des mittigen Paars an Halteelementen.

Ein noch weiter zur Mittellinie außen angeordnetes Paar an Halteelementen weist Halteelemente auf, die jeweils portalförmigen mit einer abgerundeten Spitze ausgeführt sind, und sich bevorzugt so hoch erstrecken wie die kreuzförmigen Erhebungen oder Halteelemente. Eine Mittelachse der portalförmigen Halteelemente ist deckungsgleich zu einer Mittelachse der kreuzförmigen Halteelemente.

Ein zur Mittellinie noch weiter außen angeordnetes Paar an Halteelementen weist jeweils Halteelemente auf, die jeweils als Flachstift ausgeführt sind, der einen von der Mittelinie wegorientierten Verstärkungssteg und gegenüberliegend dazu ein Hakenelement aufweist. Das Hakenelement ist demnach in Richtung zur Mittellinie orientiert. Der Flachstift ist höher ausgeführt als das jeweils kreuzförmige Halteelement und überragt eine freie Kante des jeweils endseitig an dem Basissteg angeordneten U-Schenkels.

Die drei zuletzt genannten Paare an Halteelementen sind mit ihren Halteelementen auf einer gemeinsamen Mittelachse angeordnet. Das mittige Paar an Halteelementen ist versetzt dazu an dem Basissteg angeordnet.

Insbesondere sind beispielhaft vier Paare an unterschiedlichen Halteelementen an dem Basissteg angeordnet, wobei die Halteelemente des jeweiligen Paars bevorzugt identisch ausgeführt sind. Es liegt im Sinne der Erfindung, wenn mehr oder weniger als die angegebene Anzahl an Paaren vorgesehen sind, was von der Dimension der Halteeinrichtung, insbesondere von deren Basissteg abhängt, der in seiner Erstreckungsrichtung angepasste Dimensionen aufweisen kann.

In bevorzugter Ausgestaltung sind die an den U-Schenkeln angeordneten Halteelemente bezogen auf die Mittellinie der Halteeinrichtung ebenfalls paarweise identisch ausgeführt, so dass das eine Halteelement des einen Paars an Halteelementen an dem einen U-Schenkel und das andere an dem dazu gegenüberliegenden U-Schenkel angeordnet ist. In weiter bevorzugter Ausgestaltung sind drei Paare an Halteelementen an den U-Schenkeln angeordnet. Anders gesagt weist jeder U-Schenkel drei Halteelemente auf, die einander gegenüberliegen und insbesondere auf einer gemeinsamen Linie angeordnet sind. Von diesen Paaren an Halteelementen ist ein jeweils am nächsten zum Basissteg angeordnetes Halteelement T-förmig mit einem Befestigungssteg und einem senkrecht dazu angeordneten Haltesteg ausgeführt, wobei der Befestigungssteg von dem jeweiligen U-Schenkel absteht. Ein weiter zum Basissteg beabstandete Paar an Halteelementen ist identisch dazu als T-förmiges Halteelement ausgeführt, und kann als mittiges Paar bezeichnet werden. Ein noch weiter von dem Basissteg beabstandetes Paar an Halteelementen weist jeweils ein portalförmiges Halteelement auf, an deren von den U-Schenkeln abstehenden und flexiblen Portalstegen Widerhaken angeordnet sind, wobei die Portalstege in einem abgeflachten Verbindungssteg münden, welcher Verbindungssteg parallel zur Längserstreckung der U-Schenkel angeordnet ist, und die beiden Portalstege miteinander verbindet. Natürlich soll auch hier gelten, dass die angegebene Anzahl an Paaren von den Dimensionen der U-Schenkel variieren kann. Auch könnte das Hakenelement, das an dem als Flachstift ausgeführten Halteelement des Basisstegs angeordnet ist, noch als Paar an Halteelementen angesehen werden, welches dem jeweiligen U-Schenkel zuzuordnen wäre.

Wie oben bereits erwähnt, ist das flexible Spaltabdeckelement als viereckiges Flachelement ausgeführt, an deren einer Seite ein Halteeinrichtungsflügel, dazu gegenüberliegend an der anderen Seite ein Befestigungsflügel sowie an den dazwischen angeordneten freien Seiten Klappflügel angeordnet sind. Dabei weist das flexible Spaltabdeckelement eine Sichtseite und eine dazu gegenüberliegende Unterseite auf. Die Sichtseite ist diejenige Seite, die im montierten Zustand sichtbar ist. Die Sichtseite kann strukturiert sein, und insbesondere an die Ausgestaltung der Sichtseite der Lenksäulenverkleidung identisch angepasst sein, so dass sich im zusammenmontierten Zustand ein stimmiges und hochwertiges Gesamterscheinungsbild der Anordnung zur Spaltabdeckung einstellt. Insbesondere ist das flexible Spaltabdeckelement aus einem Kunststoff, zum Beispiel aus PVC (Polyvinylchlorid, kurz: Vinyl), einem Kunstleder oder einem anderen geeigneten Werkstoff einstückig gebildet, insbesondere einstückig aus einer Matte ausgeschnitten oder ausgestanzt.

In weiter bevorzugter Ausgestaltung weist das flexible Spaltabdeckelement korrespondierend zu den Halteelementen ausgeführte Ausnehmungen auf, so dass das flexible Spaltabdeckelement in einfacher Weise werkzeugfrei an der Halteeinrichtung lösbar befestigt werden kann. Insbesondere weist das flexible Spaltabdeckelement an seinem Halteinrichtungsflügel zu den an dem Basissteg angeordneten Halteelementen korrespondierende Ausnehmungen auf, wobei an den sich gegenüberliegenden Klappflügeln die zu den an den U-Schenkeln angeordneten Halteelementen korrespondierenden Ausnehmungen angeordnet sind. Auch an dem Befestigungsflügel können Ausnehmungen angeordnet sein, über welche das Befestigungselement mit dem flexiblen Spaltabdeckelement verbunden werden kann.

In bevorzugter Ausgestaltung werden die Ausnehmungen bei dem Zuschnitt oder dem Ausstanzen des flexiblen Spaltabdeckelementes in die gewünschte Form und Größe in dieses eingebracht. Sie können aber auch zu einem späteren Zeitpunkt in den jeweiligen Flügel eingebracht werden. Insbesondere können die Ausnehmungen als Langlöcher und/oder als kreuzförmige Löcher und/oder als viereckige Löcher in quadratischer oder rechteckiger Ausgestaltung in das flexible Spaltabdeckelement eingebracht sein, wobei insbesondere an ein Austanzen oder ein Ausschneiden gedacht ist, was nicht beschränkend wirken soll. Auch die angegebene geometrische Ausgestaltung der Ausnehmungen soll nicht beschränkend wirken. Beispielsweise sind runde oder ovale oder andere Ausführungen der Ausnehmungen denkbar.

Durch die einander korrespondierenden Ausnehmungen und Halteelemente kann das flexible Spaltabdeckelement insbesondere werkzeugfrei und ohne Einsatz einer Schweißanlage, wie z.B. einer Ultraschallschweißanlage und auch ohne Verwendung eines Klebstoffes lagesicher an der Halteeinrichtung lösbar befestigt werden. Dazu wird die Halteeinrichtung mit ihrem Basissteg unter die Unterseite des flexiblen Spaltabdeckelementes, insbesondere unter den Halteinrichtungsflügel gebracht, so dass die U-Schenkeln sich von dem flexiblen Spaltabdeckelement wegerstrecken. Sodann wird die Halteeinrichtung einfach mit ihrem Basissteg mit dem Halteeinrichtungsflügel des flexiblen Spaltabdeckelementes verbunden, indem die Halteelemente durch die dort angeordneten Ausnehmungen gedrückt werden. Durch Umschwenken des flexiblen Spaltabdeckelements um 180° um den Basissteg herum, kommt die Halteeinrichtung mit ihren U-Schenkeln auf der Unterseite des flexiblen Spaltabdeckelementes zwischen den Klappflügeln auf dem flexiblen Spaltabdeckelement zu liegen. So können dann die Klappflügel um den jeweiligen U-Schenkel geklappt werden und an den Halteelementen, die in die dort angeordneten Ausnehmungen eingreifen, lösbar festgelegt werden. Die Ausnehmungen und Halteelemente sind in Zusammenwirken mit dem Basissteg und den U-Schenkeln so ausgeführt, dass das flexible Spaltabdeckelement quasi auf der Halteeinrichtung aufgespannt ist, und sich gegen die Spannkraft nicht ungewollt lösen kann. Die Halteeinrichtung ist quasi vollständig von dem betreffenden Flügel umwickelt. Ein Lösen ist dennoch möglich, wenn dies gewünscht ist, indem die jeweiligen Flügel durch Trennen der Verbindung von Halteelement und Aufnahme von den U-Schenkeln und dem Basissteg entgegen der Spannkraft gelöst werden. Die zueinander angepassten Halteelemente und Ausnehmungen bewirken in Zusammenwirken mit dem Basissteg und den U-Schenkeln zu dem ein automatisches Zentrieren des flexiblen Spaltabdeckelementes an der Halteeinrichtung, was die Montagezeit zur Vormontage der Spaltabdeckungseinrichtung weiter reduziert.

Diese so vormontierte Spaltabdeckungseinrichtung kann mit der Lenksäulenverkleidung verbunden werden. In bevorzugter Ausgestaltung sind dazu zumindest einige der zuvor benannten Halteelemente geeignet, die insofern vorteilhaft eine Doppelfunktion haben. Zum einen dienen diese dazu das flexible Spaltabdeckelement mit der Halteinrichtung kraftformschlüssig zu verbinden. Zum anderen dienen diese dazu, die Spaltabdeckungseinrichtung über die Halteeinrichtung mit der Lenksäulenverkleidung zu verbinden, bevorzugt zu verrasten. Dazu sind entsprechend zu den betreffenden Halteelementen ausgeführte Gegenelemente an der Lenksäulenverkleidung angeordnet.

In bevorzugter Ausgestaltung weist die Lenksäulenverkleidung dazu einen an den Basissteg korrespondierenden Gegensteg auf, der zu den an dem Basissteg angeordneten Halteelementen korrespondierende Aufnahmen aufweist. Noch weiter bevorzugt sind an der Lenksäulenverkleidung zu den U-Schenkeln korrespondierende Gegenschenkel angeordnet, die zu den an den U-Schenkeln angeordneten Halteelementen korrespondierende Aufnahmen aufweisen.

Die betreffenden Halteelemente müssen einfach in die korrespondierenden Aufnahmen eingeführt werden, und diese durchgreifen oder in diese eingreifen, wobei so eine Clip- oder Rastverbindung hergestellt ist, die nur dann lösbar ist, sofern dies gewünscht ist. Das Einrasten ist deutlich durch entsprechende Rastgeräusche wahrnehmbar, so dass dem Monteur ein Hinweis zur hinreichenden Verbindung gegeben ist. Dabei ist zielführend, dass die kreuzförmig ausgeführten Halteelemente des Basisstegs als Zentrierstifte fungieren können, was den Zusammenbau erheblich vereinfacht.

In bevorzugter Ausgestaltung ist für jedes der an der Halteeinrichtung angeordneten Halteelemente eine korrespondierende Aufnahme an der Lenksäulenverkleidung angeordnet. In weiter bevorzugter Ausgestaltung durchgreift jedes der an dem Basissteg der Halteeinrichtung angeordnete Halteelement die jeweils korrespondierende Aufnahme an dem Gegensteg der Lenksäulenverkleidung, wobei Halteelemente und Aufnahmen so ausgeführt sind, dass diese miteinander verrasten, und insofern auch wieder entgegen der Rastkraft wieder getrennt werden können, wenn dies gewünscht ist. In noch weiter bevorzugter Ausgestaltung durchgreift lediglich das portalähnliche Halteelement an den U-Schenkeln der Halteeinrichtung die korrespondierende Aufnahme an den Gegenschenkeln der Lenksäulenverkleidung, wobei die flexiblen Portalstege bei dem Eindrücken in die korrespondierenden Aufnahmen ausweichen und sich, nachdem die Widerhaken entsprechende Gegenflächen passiert haben, in die Ausgangsposition zurückbewegen, so dass die Widerhaken die entsprechende Gegenfläche der korrespondierenden Aufnahme hintergreifen. Die T-förmigen Halteelemente an den U-Schenkeln dagegen greifen lediglich in die jeweils korrespondierenden Aufnahmen an den Gegenschenkeln ein, ohne diese zu durchgreifen. Auch wenn hier keine Rastverbindung zur Verfügung gestellt wird, ist gleichwohl auch hier eine hinreichende Lagesicherung erzeugt, indem die Halteelemente und Aufnahmen entsprechend ausgeführt sind.

Die Lenksäulenverkleidung weist bekannterweise eine obere Abdeckung und eine untere Abdeckung auf, die miteinander verbindbar sind. In bevorzugter Ausgestaltung ist die vormontierte Spaltabdeckungseinrichtung mit der oberen Abdeckung der Lenksäulenverkleidung verbunden. Die obere Abdeckung ist zusammen mit der Spaltabdeckungseinrichtung mit der unteren Abdeckung verrastbar, so dass auch diese Elemente zerstörungsfrei voneinander getrennt werden können, wenn dies erforderlich sein sollte.

In einem weiteren Aspekt der Erfindung wird ein Verfahren zur Herstellung einer Spaltabdeckungseinrichtung der oben beschriebenen Art aufgezeigt. Die Spaltabdeckungseinrichtung eignet sich zur Verbindung mit einer Lenksäulenverkleidung, insbesondere mit deren oberer Abdeckung, um einen veränderlichen Spalt zwischen einer verstellbaren Lenksäule und einem Armaturenbrett eines Fahrzeugs abzudecken.

Das Verfahren umfasst zumindest die folgenden Schritte:
- Bereitstellen einer Halteeinrichtung in U-förmiger Ausgestaltung mit einem Basissteg und sich davon gleichorientiert wegerstreckenden U-Schenkeln, wobei an dem Basissteg und an den U-Schenkeln Halteelemente angeordnet sind,
- Bereitstellen eines flexiblen Spaltabdeckelementes an der zu den Halteelementen korrespondierende Ausnehmungen angeordnet sind; dann zunächst
- Zusammenführen der Halteeinrichtung und des flexiblen Spaltabdeckelementes so, dass der Basissteg der Halteeinrichtung an einer Unterseite des flexiblen Spaltabdeckelementes angelegt wird, so dass die U-Schenkel sich von dem flexiblen Spaltabdeckelement wegerstrecken; dann
- Eindrücken der an dem Basissteg angeordneten Halteelemente in die dazu korrespondierenden Ausnehmungen des flexiblen Spaltabdeckelementes; sodann
- Umklappen des flexiblen Spaltabdeckelementes um den Basissteg herum, so dass die U-Schenkel auf der Unterseite des flexiblen Spaltabdeckelementes zumindest bereichsweise aufliegen; und dann
- Umklappen von an dem flexiblen Spaltabdeckelementes angeordneten Klappflügeln unter Zugspannung um die U-Schenkel der Halteeinrichtung herum und Verbinden der an den U-Schenkeln angeordneten Halteelemente mit den dazu korrespondierenden Ausnehmungen des flexiblen Spaltabdeckelementes, sodann
- Verbinden der Halteeinrichtung mit der Lenksäulenverkleidung indem zumindest ein Teil der an der Halteinrichtung angeordneten Halteelemente in entsprechende Aufnahmen der Lenksäulenverkleidung kraftformschlüssig einrastet.

Mit dem Verfahren gemäß der Erfindung kann auf spezielle Werkzeuge und Schweißanlagen, wie z.B. Ultraschallschweißanlegen oder Klebstoffe zur Herstellung der Spaltabdeckungseinrichtung verzichtet werden. Es wird vielmehr in idealer Ausgestaltung ein Verfahren aufgezeigt, mit dem das flexible Spaltabdeckelement unter Verzicht auf eine stoffschlüssige Verbindung zur Halteeinrichtung gleichwohl hinreichend lagesicher befestigt ist. Dies wird mit dem kraftformschlüssigen Festlegen erreicht, wobei lediglich die Halteelemente die korrespondierenden Ausnehmungen des flexiblen Spaltabdeckelementes durchgreifen. So ist das flexible Spaltabdeckelement auf der Halteeinrichtung aufgespannt und zugleich zentriert.

Zur Bereitstellung der Halteeirichtung ist in bevorzugter Ausgestaltung des Verfahrens vorgesehen, dass diese einstückig hergestellt ist, wobei die Halteeinrichtung insbesondere als Spritzgussteil aus einem geeigneten Kunststoff gefertigt wird. Natürlich kann auch vorgesehen sein, dass Basissteg und U-Schenkel als separate Teile hergestellt und anschließend miteinander verbunden werden.

Zur kraftformschlüssigen, also lösbaren Befestigung des flexiblen Spaltabdeckelementes an der Halteeinrichtung weist diese Halteelemente auf, welche sowohl an dem Basissteg als auch an den U-Schenkeln von diesen abstehend angeordnet sind, und welche bei der Herstellung der Halteeinrichtung gleichzeitig, insbesondere in einem gemeinsamen Spritzprozess mit hergestellt werden. Natürlich können die Halteelemente auch in einem gemeinsamen Herstellungsprozess mit dem separat zu fertigenden Basissteg und den U-Schenkeln hergestellt werden, insbesondere in einem Kunststoffspritzverfahren.

Zur Ausgestaltung und Anordnung der Halteelemente wird auf die obige Beschreibung verwiesen, die hier vollumfänglich aufgenommen sein soll.

In günstiger Ausgestaltung sieht das Verfahren vor, dass das flexible Spaltabdeckelement einstückig als viereckiges Flachelement hergestellt wird, an dem ein Halteeinrichtungsflügel, ein dazu gegenüberliegender Befestigungsflügel, und an den dazwischen angeordneten freien Seiten jeweils ein Klappflügel angeordnet ist, wobei die zu den Halteelementen der Halteeinrichtung korrespondierenden Ausnehmungen in dem Halteeinrichtungsflügel und den beiden Klappflügeln eingebracht werden. In dem Befestigungsflügel können ebenfalls Ausnehmungen eingebracht werden, so dass ein Befestigungselement an dem Befestigungsflügel befestigt werden kann. Mit dem Befestigungselement kann eine Verbindung zum Armaturenbrett hergestellt werden, so dass die Spaltabdeckungseinrichtung über die Halteeinrichtung an der Lenksäulenverkleidung und über das Befestigungselement gegenüberliegend dazu festgelegt ist. Durch die flexible Ausgestaltung des flexiblen Spaltabdeckelementes können die Bewegungen der Lenksäule ausgeglichen werden, wobei der Spalt abgedeckt bleibt. Dies wird insbesondere durch einen nicht auf der Halteeinrichtung aufgespannten Abschnitt des flexiblen Spaltabdeckelementes ermöglicht, wobei besagter Abschnitt insbesondere zwischen dem Befestigungsflügel und einem freien Ende der U-Schenkel der Halteeinrichtung angeordnet ist.

Weitere vorteilhafte Einzelheiten und Wirkungen der Erfindung sind im Folgenden anhand von in den Figuren dargestellten Ausführungsbeispielen näher erläutert. Es zeigen
- Fig. 1: eine Anordnung zur Spaltabdeckung mit einer Lenksäulenverkleidung und einer Spaltabdeckeinrichtung in perspektivischer Ansicht auf eine Sichtseite;
- Fig. 2: die Anordnung zur Spaltabdeckung aus Figur 1 in perspektivischer Ansicht auf eine Unterseite;
- Fig. 3: eine Halteeinrichtung als Einzelheit,
- Fig. 4: ein flexibles Spaltabdeckelement als Einzelheit,
- Fig. 5: eine Ansicht von oben auf das mit der Halteeinrichtung verbundene Spaltabdeckelement in einem ersten Vormontageschritt,
- Fig. 6: eine Ansicht von oben auf das mit der Halteeinrichtung verbundene Spaltabdeckelement in einem weiteren Vormontageschritt, und
- Fig. 7: eine Ansicht von oben auf das mit der Halteeinrichtung verbundene Spaltabdeckelement in einem letzten Vormontageschritt.

In den unterschiedlichen Figuren sind gleiche Teile stets mit denselben Bezugszeichen versehen, weswegen diese in der Regel auch nur einmal beschrieben werden.

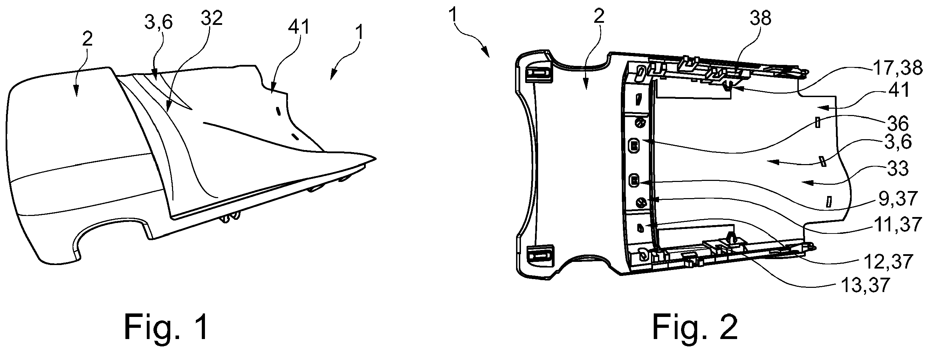

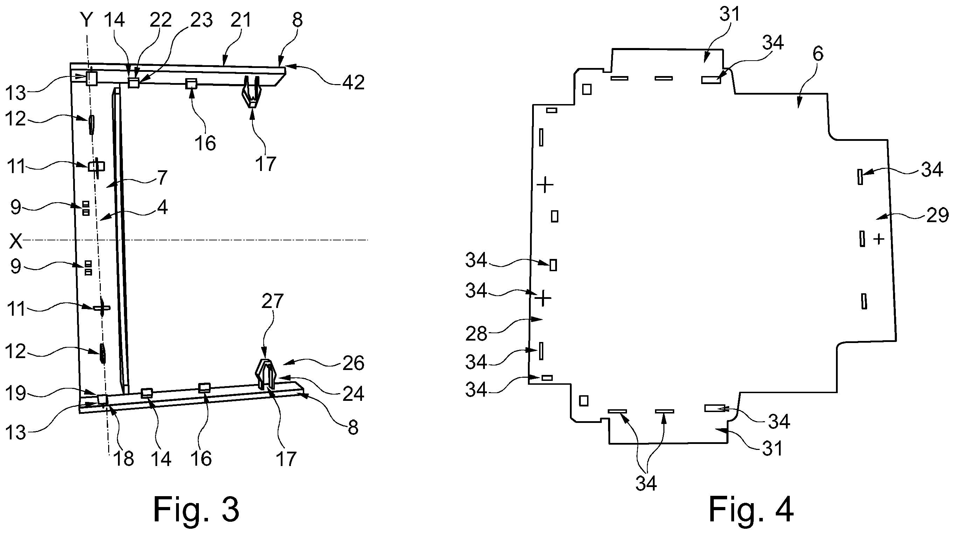

Die Figuren 1 und 2 zeigen eine Anordnung 1 zur Spaltabdeckung eines veränderlichen Spaltes zwischen einer verstellbaren Lenksäule und einem Armaturenbrett eines Fahrzeugs mit einer Lenksäulenverkleidung 2 und einer Spaltabdeckungseinrichtung 3. Die Spaltabdeckungseinrichtung 3 weist eine Halteeinrichtung 4 und ein flexibles Spaltabdeckelement 6 auf, welches einerseits kraftformschlüssig an der Halteeinrichtung 4 lösbar befestigt ist und andererseits mit einem in den Figuren nicht dargestellten Befestigungselement verbindbar ist, wobei die Halteeinrichtung 4 ihrerseits kraftformschlüssig mit der Lenksäulenverkleidung 2 lösbar befestigt ist. Die Halteeinrichtung 4 ist in den Figuren 1 und 2 verdeckt, und am besten in den Figuren 3 und 5 bis 7 erkennbar.

Die Lenksäulenverkleidung 2 weist bekannterweise eine obere Abdeckung und eine untere Abdeckung auf, die miteinander verbindbar sind. Die Spaltabdeckungseinrichtung 3 ist mit der oberen Abdeckung der Lenksäulenverkleidung 2 verbunden.

Die obere Abdeckung ist auch zusammen mit der Spaltabdeckungseinrichtung 3 mit der unteren Abdeckung verrastbar, so dass diese Elemente zerstörungsfrei voneinander getrennt werden können, wenn dies erforderlich sein sollte. In dem dargestellten Ausführungsbeispiel ist eine obere Abdeckung der Lenksäulenverkleidung 2 dargestellt.

Bei dem in Figur 3 dargestellten Ausführungsbeispiel ist die Halteeinrichtung 4 als U-förmiger Rahmen mit einem Basissteg 7 und zwei sich gleichorientiert davon wegerstreckenden U-Schenkeln 8 ausgeführt ist. Wie erkennbar sind Basisschenkel 7 und U-Schenkel 8 beispielhaft rechteckig ausgeführt. Dabei sind der Basissteg 7 und die jeweiligen Schenkel 8 länger als hoch und höher als dick ausgebildet. Man könnte auch sagen sie sind plattenartig ausgebildet. Insbesondere ist der Basissteg 7 als Flachsteg ausgeführt, wobei der jeweilige U-Schenkel 8 senkrecht dazu angeordnet als Hochsteg ausgeführt ist. An dem Basissteg 7 ist so endseitig jeweils ein U-Schenkel 8 hochkant angeordnet.

Zur kraftformschlüssigen, also lösbaren Befestigung des flexiblen Spaltabdeckelementes 6 an der Halteeinrichtung 4 weist diese Halteelemente 9, 11, 12, 13, 14, 16, 17 auf, welche sowohl an dem Basissteg 7 als auch an den U-Schenkeln 8 von diesen abstehend angeordnet sind. Erkennbar sind die Halteelemente 9, 11, 12, 13, 14, 16, 17 unterschiedlich ausgeführt, wobei an dem Basissteg 7 jeweils Paare identischer Halteelemente 9, 11, 12, 13 angeordnet sind, wobei das jeweilige Halteelement 9, 11, 12, 13 eines Paares von Halteelementen gleich beabstandet zu einer Mittellinie X der Halteeinrichtung 4 angeordnet ist.

Ein mittiges Paar an Halteelementen, weist jeweils Halteelemente 9 auf, die jeweils aus zwei zueinander in Erstreckungsrichtung des Basisstegs 7 beabstandeten und parallel verlaufenden, aber senkrecht zur Erstreckungsrichtung angeordneten Stegen gebildet sind.

Ein etwas weiter außerhalb zur Mittellinie X angeordnetes Paar an Halteelementen weist Halteelemente 11 auf, die als kreuzförmige Erhebung ausgebildet sind, die höher ausgeführt sind als das jeweilige Halteelement 9 des mittigen Paars an Halteelementen.

Ein noch weiter zur Mittellinie X außen angeordnetes Paar an Halteelementen weist Halteelemente 12 auf, die jeweils portalförmig mit einer abgerundeten Spitze ausgeführt sind, und sich bevorzugt so hoch erstrecken wie die kreuzförmigen Halteelemente 11. In diesen Halteelementen 12 ist mittig ein Schlitz angeordnet, der sich bis zum Basissteg 7 erstreckt. Eine Mittelachse Y der portalförmigen Halteelemente 12 ist deckungsgleich zu einer Mittelachse Y der kreuzförmigen Halteelemente 11.

Ein zur Mittellinie X noch weiter außen angeordnetes Paar an Halteelementen weist jeweils Halteelemente 13 auf, die jeweils als Flachstift ausgeführt sind, der einen von der Mittelinie X wegorientierten Verstärkungssteg 18 und gegenüberliegend dazu ein Hakenelement 19 aufweist. Das Hakenelement 19 ist demnach in Richtung zur Mittellinie X orientiert. Der Flachstift ist höher ausgeführt als das jeweils kreuzförmige Halteelement 11 sowie als das portalförmige Halteelement 12 und überragt eine freie Kante 21 des jeweils endseitig an dem Basissteg 7 angeordneten U-Schenkels 8.

Die drei zuletzt genannten Paare an Halteelementen sind auf einer gemeinsamen Mittelachse Y angeordnet. Das mittige Paar an Halteelementen ist in der Zeichnungsebene der Figur 3 nach links versetzt dazu an dem Basissteg 7 angeordnet.

Insbesondere sind also vier Paare an unterschiedlichen Halteelementen 9, 11, 12, 13 an dem Basissteg 7 angeordnet, wobei die Halteelemente 9, 11, 12, 13 des jeweiligen Paars bevorzugt identisch ausgeführt sind.

Wie beispielhaft dargestellt sind die an den U-Schenkeln 8 angeordneten Halteelemente 14, 16, 17 bezogen auf die Mittellinie X der Halteeinrichtung 4 ebenfalls paarweise identisch ausgeführt, so dass das eine Halteelement 14, 16, 17 des einen Paars an Halteelementen an dem einen U-Schenkel 8 und das andere an dem dazu gegenüberliegenden U-Schenkel 8 angeordnet ist. Insofern sind drei Paare an Halteelementen an den U-Schenkeln 8 angeordnet. Anders gesagt weist jeder U-Schenkel 8 drei Halteelemente 14, 16, 17 auf, die bezogen auf die Mittellinie X einander gegenüberliegen und insbesondere auf einer gemeinsamen Anordnungsachse angeordnet sind.

Von diesen Paaren an Halteelementen ist ein jeweils am nächsten zum Basissteg 7 angeordnetes Halteelement 14 T-förmig mit einem Befestigungssteg 22 und einem senkrecht dazu angeordneten Haltesteg 23 ausgeführt, wobei der Befestigungssteg von dem jeweiligen U-Schenkel 8 absteht. Ein weiter zum Basissteg 7 beabstandetes Paar an Halteelementen ist identisch dazu als T-förmiges Halteelement 16 ausgeführt, und kann als mittiges Paar bezeichnet werden. Ein noch weiter von dem Basissteg 7 beabstandetes Paar an Halteelementen weist jeweils ein portalförmiges Halteelement 17 auf, an deren von den U-Schenkeln 8 abstehenden und flexiblen Portalstegen 24 Widerhaken 26 angeordnet sind, wobei die Portalstege 24 in einem abgeflachten Verbindungssteg 27 münden, welcher Verbindungssteg 27 parallel zur Längserstreckung der U-Schenkel 8 angeordnet ist.

Wie in Figur 4 erkennbar, ist das flexible Spaltabdeckelement 6 als viereckiges Flachelement ausgeführt, an dessen einer Seite ein Halteeinrichtungsflügel 28, dazu gegenüberliegend an der anderen Seite ein Befestigungsflügel 29 sowie an den dazwischen angeordneten freien Seiten Klappflügel 31 angeordnet sind. Dabei weist das flexible Spaltabdeckelement 6 eine Sichtseite 32 und eine dazu gegenüberliegende Unterseite 33 auf. Die Sichtseite 32 ist diejenige Seite, die im montierten Zustand sichtbar ist.

In Figur 4 ist weiter erkennbar, dass das flexible Spaltabdeckelement 6 korrespondierend zu den Halteelementen 9, 11, 12, 13, 14, 16, 17 ausgeführte Ausnehmungen 34 aufweist, so dass das flexible Spaltabdeckelement 6 in einfacher Weise an der Halteeinrichtung 4 lösbar befestigt werden kann. Beispielhaft weist das flexible Spaltabdeckelement 6 an seinem Halteeinrichtungsflügel 28 zu den an dem Basissteg 7 angeordneten Halteelementen 9, 11, 12, 13 korrespondierende Ausnehmungen 34 auf, wobei an den sich gegenüberliegenden Klappflügeln 31 die zu den an den U-Schenkeln 8 angeordneten Halteelementen 14, 16, 17 korrespondierenden Ausnehmungen 34 angeordnet sind. Auch an dem Befestigungsflügel 29 sind Ausnehmungen 34 angeordnet, über welche das Befestigungselement mit dem flexiblen Spaltabdeckelement 6 verbunden werden kann.

Die Ausnehmungen 34 können als Langlöcher und/oder als kreuzförmige Löcher und/oder als viereckige Löcher in quadratischer oder rechteckiger Ausgestaltung in das flexible Spaltabdeckelement 6 eingebracht sein, und so ausgeführt sein, dass das die jeweils korrespondierenden Halteelemente 9, 11, 12, 13, 14, 16, 17 mit zumindest mit einem Bereich, also zumindest mit einer Kante oder mit zumindest einer Seite an zumindest einem Rand der Ausnehmungen anliegen.

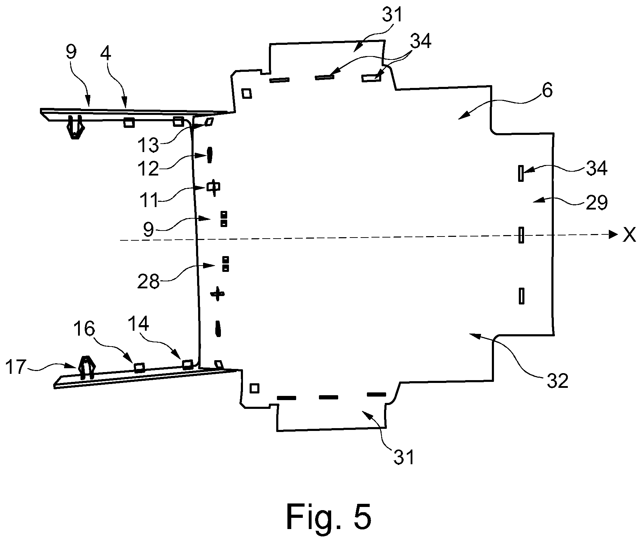

Die Montageschritte zur Verbindung der Halteeinrichtung 4 mit dem flexiblen Spaltabdeckelement 6 sind in den Figuren 5 bis 7 beispielhaft dargestellt.

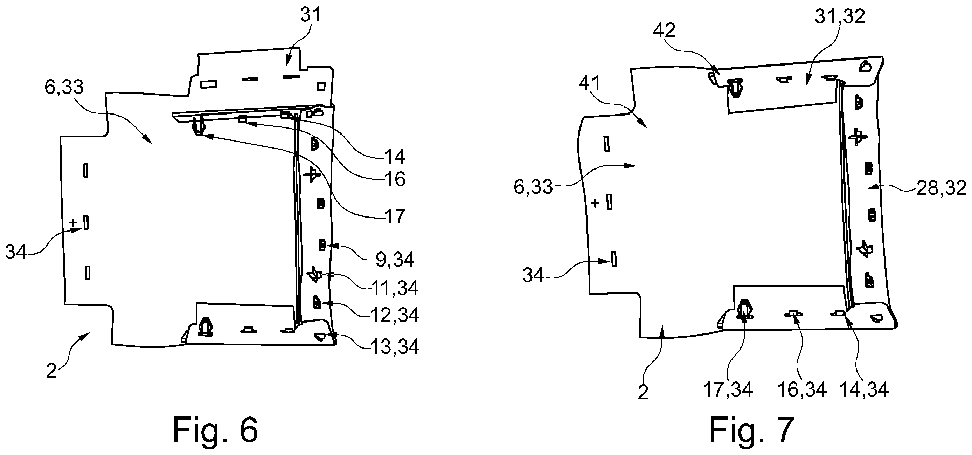

Zunächst wird die Halteeinrichtung 4 mit ihrem Basissteg 7 unter die Unterseite 33 des flexiblen Spaltabdeckelementes 6, insbesondere unter den Halteinrichtungsflügel 28 gebracht, so dass die U-Schenkeln 8 sich von dem flexiblen Spaltabdeckelement 6 wegerstrecken, wie in Figur 5 erkennbar ist. Bei dem in Figur 5 dargestellten Ausführungsbeispiel erstrecken sich die U-Schenkel 8 in Richtung zur linken Seite. Sodann wird die Halteeinrichtung 4 einfach mit ihrem Basissteg 7 mit dem Halteeinrichtungsflügel 28 des flexiblen Spaltabdeckelementes 6 verbunden, indem die Halteelemente 9, 11, 12, 13 durch die in dem Halteeirichtungsflügel 28 angeordneten Ausnehmungen 34 gedrückt werden. Durch Umschwenken des flexiblen Spaltabdeckelements 6 um 180° um den Basissteg 7 herum, kommt die Halteeinrichtung 4 mit ihren U-Schenkeln 8 auf der Unterseite 33 des flexiblen Spaltabdeckelementes 6 zwischen den Klappflügeln 31 auf dem flexiblen Spaltabdeckelement 6 zu liegen. Dies ist in den Figuren 6 und 7 erkennbar, wobei hier bereits die Schritte des Umklappens der Klappflügel 31 ausgeführt werden. Es können also die Klappflügel 31 um den jeweiligen U-Schenkel 8 geklappt werden und an den Halteelementen 14, 16, 17, die in die Ausnehmungen 34 eingreifen lösbar festgelegt werden. Die Ausnehmungen 34 und Halteelemente 9, 11, 12, 13, 14, 16, 17 sind in Zusammenwirken mit dem Basissteg 7 und den U-Schenkeln 8 so ausgeführt, dass das flexible Spaltabdeckelement 6 quasi auf der Halteeinrichtung 4 aufgespannt ist, und sich gegen die Spannkraft nicht ungewollt lösen kann. Die Halteeinrichtung 4 ist quasi vollständig von dem betreffenden Flügel 28, 29 umwickelt, wobei die Unterseite 33 innen, also in den Figuren 6 und 7 erkennbar ist, wobei die Sichtseite 32 des flexiblen Spaltabdeckelementes 6 in diesen Figuren nicht sichtbar ist. Ledig an den umgeklappten Klappflügeln 31 und an dem von dem Halteeinrichtungsflügel 28 abgedeckten Basissteg 7 ist die Sichtseite 32 in der Figur 7 erkennbar.

Diese so vormontierte Spaltabdeckungseinrichtung 3, die in Figur 7 dargestellt ist, kann mit der Lenksäulenverkleidung 2, also mit deren oberen Abdeckung verbunden werden. In bevorzugter Ausgestaltung sind dazu einige der zuvor benannten Halteelemente 9, 11, 12, 13, 14, 16, 17 geeignet ausgeführt, die insofern vorteilhaft eine Doppelfunktion haben. Zum einen dienen diese dazu das flexible Spaltabdeckelement 6 mit der Halteinrichtung 4 kraftformschlüssig zu verbinden. Zum anderen dienen diese dazu, die Spaltabdeckungseinrichtung 3 über die Halteeinrichtung 4 mit der Lenksäulenverkleidung 2, also mit deren oberen Abdeckung zu verbinden, insbesondere zu verrasten. Dazu sind entsprechend zu Halteeinrichtung 4 ausgeführte Gegenelemente an der Lenksäulenverkleidung 2, also an deren oberen Abdeckung angeordnet.

In Figur 7 ist noch erkennbar, dass die Sichtseite 32 der Klappflügel 31 und des Halteeinrichtungsflügels 28 quasi auf einer Innenseite der Spaltabdeckungseinrichtung 3 angeordnet sind.

Wie in Figur 2 erkennbar, weist die Lenksäulenverkleidung 2, also deren obere Abdeckung dazu einen zu dem Basissteg 7 korrespondierenden Gegensteg 36 als korrespondierendes Gegenelement auf, der zu den an dem Basissteg 7 angeordneten Halteelementen 9,11,12,13 korrespondierende Aufnahmen 37 aufweist. Wie weiter in Figur 2 erkennbar ist, sind an der Lenksäulenverkleidung 2, also an deren oberen Abdeckung zu den U-Schenkeln 8 korrespondierende Gegenschenkel 38 als korrespondierende Gegenelemente angeordnet, die zu den an den U-Schenkeln 8 angeordneten Halteelementen 14, 16, 17 korrespondierende Aufnahmen 39 aufweisen.

Die betreffenden Halteelemente 9, 11, 12, 13, 14, 16, 17 müssen einfach in die korrespondierenden Aufnahmen 37, 39 eingeführt werden, und diese durchgreifen oder in diese eingreifen, wobei so eine Clip- oder Rastverbindung hergestellt ist, die nur dann lösbar ist, sofern dies gewünscht ist. Das Einrasten ist deutlich durch entsprechende Rastgeräusche wahrnehmbar, so dass dem Monteur ein Hinweis zur hinreichenden Verbindung gegeben ist.

Beispielhaft ist für jedes der an der Halteeinrichtung 4 angeordneten Halteelemente 9, 11, 12, 13, 14, 16, 17 eine korrespondierende Aufnahme 37, 39 an der Lenksäulenverkleidung 2, also anderen oberen Abdeckung angeordnet. Dabei durchgreift jedes der an dem Basissteg 7 der Halteeinrichtung 4 angeordnete Halteelement 9, 11, 12, 13 die jeweils korrespondierende Aufnahme 38 an dem Gegensteg 36 der Lenksäulenverkleidung 2, also der oberen Abdeckung, wobei Halteelemente 9, 11, 12, 13 und Aufnahmen 38 so ausgeführt sind, dass diese miteinander verrasten, und insofern auch entgegen der Rastkraft wieder getrennt werden können, wenn dies gewünscht ist. Wie in Figur 2 weiter erkennbar ist, durchgreift lediglich das portalähnliche Halteelement 17 an den U-Schenkeln 8 der Halteeinrichtung 4 die korrespondierende Aufnahme 39 an den Gegenschenkeln 38 der Lenksäulenverkleidung 2 also an deren oberen Abdeckung, wobei die flexiblen Portalstege 24 bei dem Eindrücken in die korrespondierenden Aufnahme 38 ausweichen und sich, nachdem die Widerhaken 26 das entsprechende Gegenfläche passiert haben, in die Ausgangsposition zurückbewegen, so dass die Widerhaken 26 die entsprechende Gegenfläche der korrespondierenden Aufnahme 39 hintergreifen.

Die T-förmigen Halteelemente 14, 16 an den U-Schenkeln 8 dagegen greifen lediglich in die jeweils korrespondierenden Aufnahmen 39 an den Gegenschenkeln 38 ein, ohne diese zu durchgreifen. Gleichwohl ist auch hier eine hinreichende Lagesicherung erzeugt, indem die Halteelemente 14, 16 und Aufnahmen 39 entsprechend ausgeführt sind.

Wie in den Figuren 5 bis 7 am besten zu sehen ist, sind in dem Befestigungsflügel 29 ebenfalls Ausnehmungen 24 eingebracht, so dass ein Befestigungselement an dem Befestigungsflügel 29 befestigt werden kann. Mit dem Befestigungselement kann eine Verbindung zum Armaturenbrett hergestellt werden, so dass die Spaltabdeckungseinrichtung 3 über die Halteeinrichtung 4 an der Lenksäulenverkleidung 2, also anderen oberen Abdeckung und über das Befestigungselement gegenüberliegend dazu festgelegt ist. Durch die flexible Ausgestaltung des flexiblen Spaltabdeckelementes 6 können die Bewegungen der Lenksäule ausgeglichen werden, wobei der Spalt abgedeckt bleibt. Dies wird insbesondere durch einen nicht auf der Halteeinrichtung 4 aufgespannten Abschnitt 41 des flexiblen Spaltabdeckelementes 6 ermöglicht, wobei besagter Abschnitt 41 insbesondere zwischen dem Befestigungsflügel 29 und einem freien Ende 42 der U-Schenkel 8 der Halteeinrichtung 4 angeordnet ist.

### Bezugszeichenliste

- 1: Anordnung
- 2: Lenksäulenverkleidung
- 3: Spaltabdeckungseinrichtung
- 4: Halteeinrichtung
- 5 6: Flexibles Spaltabdeckelement
- 7: Basissteg
- 8: U-Schenkel
- 9: Halteelement
- 10 11: Halteelement
- 12: Halteelement
- 13: Halteelement
- 14: Halteelement
- 15 16: Halteelement
- 17: Halteelement
- 18: Verstärkungssteg
- 19: Hakenelement
- 20 21: Freie Kante
- 22: Befestigungssteg
- 23: Haltesteg
- 24: Portalsteg
- 25 26: Widerhaken
- 27: Verbindungssteg
- 28: Halteeinrichtungsflügel
- 29: Befestigungsflügel
- 30 31: Klappflügel
- 32: Sichtseite
- 33: Unterseite
- 34: Ausnehmungen
- 35 36: Gegensteg
- 37: Aufnahme
- 38: Gegenschenkel
- 39: Aufnahme
- 40 41: Abschnitt
- 42: freies Ende von 8

## Patentansprüche

1. Anordnung (1) zur Spaltabdeckung eines veränderlichen Spaltes zwischen einer verstellbaren Lenksäule und einem Armaturenbrett eines Fahrzeugs mit einer Lenksäulenverkleidung (2) und einer Spaltabdeckungseinrichtung (3), wobei die Spaltabdeckungseinrichtung (3) eine Halteeinrichtung (4) und ein flexibles Spaltabdeckelement (6) aufweist, welches einerseits kraftformschlüssig an der Halteeinrichtung (4) lösbar befestigt ist und andererseits mit einem Befestigungselement verbindbar ist, wobei die Halteeinrichtung (4) mit dem daran angebundenen flexiblen Spaltabdeckelement (6) ihrerseits kraftformschlüssig mit der Lenksäulenverkleidung (2) lösbar befestigt ist, wobei das flexible Spaltabdeckelement (6) als viereckiges Flachelement ausgeführt, an deren einer Seite ein Halteeinrichtungsflügel (28), dazu gegenüberliegend an der anderen Seite ein Befestigungsflügel (29) angeordnet sind, **dadurch gekennzeichnet, dass** an den dazwischen angeordneten freien Seiten Klappflügel (31) angeordnet sind.

2. Anordnung (1) nach Anspruch 1,
**dadurch gekennzeichnet, dass**
die Halteeinrichtung (4) als U-förmiger Rahmen mit einem Basissteg (7) und zwei sich gleichorientiert davon wegerstreckenden U-Schenkeln (8) ausgeführt ist.

3. Anordnung (1) nach einem der vorhergehenden Ansprüche,
**dadurch gekennzeichnet, dass**
die Halteeinrichtung (4) einstückig hergestellt.

4. Anordnung (1) nach einem der vorhergehenden Ansprüche,
**dadurch gekennzeichnet, dass**
die Halteeinrichtung (4) Halteelemente (9,11,12,13,14,16,17) aufweist, welche sowohl an dem Basissteg (7) als auch an den U-Schenkeln (8) von diesen abstehend angeordnet sind.

5. Anordnung (1) nach Anspruch 4,
**dadurch gekennzeichnet, dass**
die Halteelemente (9,11,12,13,14,16,17) unterschiedlich ausgeführt sind, wobei an dem Basissteg (7) jeweils Paare identischer Halteelemente angeordnet sind, wobei das jeweilige Halteelement (9,11,12,13) eines Paares von Halteelementen gleich beabstandet zu einer Mittellinie (X) der Halteeinrichtung (4) angeordnet ist.

6. Anordnung (1) nach Anspruch 4 oder 5,
**dadurch gekennzeichnet, dass**
die an den U-Schenkeln (8) angeordneten Halteelemente (14,16,17) bezogen auf die Mittellinie (X) der Halteeinrichtung (4) paarweise identisch ausgeführt sind, so dass das eine Halteelement (14,16,17) des einen Paars an Halteelementen an dem einen U-Schenkel (8) und das andere an dem dazu gegenüberliegenden U-Schenkel (8) angeordnet ist.

7. Anordnung (1) nach einem der vorhergehenden Ansprüche,
**dadurch gekennzeichnet, dass**
das flexible Spaltabdeckelement (6) korrespondierend zu an der Halteeinrichtung (4) angeordneten Halteelementen (9,11,12,13,14,16,17) ausgeführte Ausnehmungen (34) aufweist.

8. Anordnung (1) nach Anspruch 7,
**dadurch gekennzeichnet, dass**
das flexible Spaltabdeckelement (6) an seinem Halteeinrichtungsflügel (28) zu den an dem Basissteg (7) angeordneten Halteelementen (9,11,12,13) korrespondierende Ausnehmungen (34) aufweist, wobei an den sich gegenüberliegenden Klappflügeln (31) die zu den an den U-Schenkeln (8) angeordneten Halteelementen (14,16,17) korrespondierenden Ausnehmungen (34) angeordnet sind, und wobei an dem Befestigungsflügel (29) Aufnahmen (34) zur Befestigung eines Befestigungselementes angeordnet sind.

9. Anordnung (1) nach einem der Ansprüche 7 oder 8,
**dadurch gekennzeichnet, dass**
zur Vormontage der Spaltabdeckungseinrichtung (3) die Halteeinrichtung (4) mit ihrem Basissteg (7) unter einer Unterseite (33) des flexiblen Spaltabdeckelementes (6), insbesondere unter dessen Halteinrichtungsflügel (28) zur Anlage gebracht wird, so dass die U-Schenkel (8) sich von dem flexiblen Spaltabdeckelement (6) wegerstrecken, wobei die Halteelemente (9,11,12,13) durch die korrespondierenden Ausnehmungen (34) gedrückt werden, und wobei durch Umschwenken des flexiblen Spaltabdeckelements (6) um den Basissteg (7) herum, die Halteeinrichtung (4) mit ihren U-Schenkeln (8) zwischen den Klappflügeln (31) auf der Unterseite (33) des flexiblen Spaltabdeckelements (6) zumindest bereichsweise aufliege, so dass dann die Klappflügel (31) um den jeweiligen U-Schenkel (8) geklappt werden und an den Halteelementen (14,16,17), die mit den dazu korrespondierenden Ausnehmungen (34) in Eingriff gebracht werden, lösbar festgelegt werden.

10. Anordnung (1) nach einem der vorhergehenden Ansprüche,
**dadurch gekennzeichnet, dass**
in einem vormontierten Zustand der Spaltabdeckungseinrichtung (3) das flexible Spaltabdeckelement (6) auf der Halteeinrichtung (4) aufgespannt ist, und sich gegen die Spannkraft nicht ungewollt lösen kann.

11. Anordnung (1) nach einem der vorhergehenden Ansprüche,
**dadurch gekennzeichnet, dass**
an der Lenksäulenverkleidung (2) zu der Halteeinrichtung (4) korrespondierende Gegenelemente angeordnet sind.

12. Anordnung (1) nach Anspruch 11,
**dadurch gekennzeichnet, dass**
an den Gegenelementen Aufnahmen (37,39) angeordnet sind, die zu an der Halteeinrichtung (4) angeordneten Halteelementen (9,11,12,13,14,16,17) korrespondierend ausgeführt sind.

13. Anordnung (1) nach Anspruch 11 oder 12,
**dadurch gekennzeichnet, dass**
die Lenksäulenverkleidung (2) einen an den Basissteg (7) korrespondierenden Gegensteg (366) aufweist, der zu den an dem Basissteg (7) angeordneten Halteelementen (9,11,12,13) korrespondierende Aufnahmen (37) aufweist.

14. Anordnung (1) nach einem der Ansprüche 11 bis 13,
**dadurch gekennzeichnet, dass**
an der Lenksäulenverkleidung (2) zu den U-Schenkeln (8) korrespondierende Gegenschenkel (38) angeordnet sind, die zu den an den U-Schenkeln (8) angeordneten Halteelementen (14,16,17) korrespondierende Aufnahmen (39) aufweisen.

## Claims

1. Arrangement (1) for gap coverage for a variable gap between an adjustable steering column and a dashboard of a vehicle, having a steering column trim (2) and a gap coverage device (3),
wherein the gap coverage device (3) has a holding device (4) and a flexible gap coverage element (6), which at one side is detachably fastened with a frictional positive fit to the holding device (4) and at the other side is connectable to a fastening element, wherein the holding device (4) having the flexible gap coverage element (6) attached thereto is in turn detachably fastened with a frictional positive fit to the steering column trim (2), wherein the flexible gap coverage element (6) is designed as a tetragonal flat element, on one side of which a holding device wing (28) is arranged, opposite this on the other side a fastening wing (29) is arranged, **characterized in that** on the interposed free sides folding wings (31) are arranged.

2. Arrangement (1) according to Claim 1,
**characterized in that**
the holding device (4) is designed as a U-shaped frame having a base member (7) and having two U limbs (8) which extend away from said base member in the same orientation.

3. Arrangement (1) according to either one of the preceding claims,
**characterized in that**
the holding device (4) is produced as a single piece.

4. Arrangement (1) according to any one of the preceding claims,
**characterized in that**
the holding device (4) has holding elements (9, 11, 12, 13, 14, 16, 17), which are arranged both on the base member (7) and on the U limbs (8) so as to project away therefrom.

5. Arrangement (1) according to Claim 4,
**characterized in that**
the holding elements (9, 11, 12, 13, 14, 16, 17) are of different design, wherein pairs of identical holding elements are arranged on the base member (7), and wherein the holding elements (9, 11, 12, 13) of each pair of holding elements are equally spaced from a centreline (X) of the holding device (4).

6. Arrangement (1) according to Claim 4 or 5,
**characterized in that**
the holding elements (14, 16, 17) arranged on the U limbs (8) are of identical design in pairs in relation to the centreline (X) of the holding device (4), such that one holding element (14, 16, 17) of a pair of holding elements is arranged on one U limb (8) and the other is arranged on the opposite U limb (8).

7. Arrangement (1) according to any one of the preceding claims,
**characterized in that**
the flexible gap coverage element (6) has openings (34) formed correspondingly to holding elements (9, 11, 12, 13, 14, 16, 17) arranged on the holding device (4).

8. Arrangement (1) according to Claim 7, **characterized in that**
the flexible gap coverage element (6) has, on its holding device wing (28), openings (34) corresponding to the holding elements (9, 11, 12, 13) arranged on the base member (7), wherein the openings (34) corresponding to the holding elements (14, 16, 17) arranged on the U limbs (8) are arranged on the mutually opposite folding wings (31), and wherein receptacles (34) for the fastening of a fastening element are arranged on the fastening wing (29).

9. Arrangement (1) according to either one of Claims 7 and 8,
**characterized in that**
for the preassembly of the gap coverage device (3), the holding device (4) is placed with its base member (7) under a bottom side (33) of the flexible gap coverage element (6), in particular under the holding device wing (28) thereof, such that the U limbs (8) extend away from the flexible gap coverage element (6), wherein the holding elements (9, 11, 12, 13) are pushed through the corresponding openings (34), and wherein, by virtue of the flexible gap coverage element (6) being folded around the base member (7), the holding device (4) comes to lie with its U limbs (8) between the folding wings (31) on the bottom side (33) of the flexible gap coverage element (6) at least in certain regions, such that the folding wings (31) are then folded around the associated U limb (8) and are detachably fixed to the holding elements (14, 16, 17), which are engaged with the corresponding openings (34).

10. Arrangement (1) according to any one of the preceding claims,
**characterized in that**
in a preassembled state of the gap coverage device (3), the flexible gap coverage element (6) is stretched over the holding device (4) and cannot undesirably become detached counter to the tension force.

11. Arrangement (1) according to any one of the preceding claims,
**characterized in that**
counterpart elements corresponding to the holding device (4) are arranged on the steering column trim (2).

12. Arrangement (1) according to Claim 11,
**characterized in that**
receptacles (37, 39) are arranged on the counterpart elements and are designed correspondingly to holding elements (9, 11, 12, 13, 14, 16, 17) arranged on the holding device (4).

13. Arrangement (1) according to Claim 11 or 12,
**characterized in that**
the steering column trim (2) has a counterpart member (366) which corresponds to the base member (7) and which has receptacles (37) corresponding to the holding elements (9, 11, 12, 13) arranged on the base member (7).

14. Arrangement (1) according to any one of Claims 11 to 13,
**characterized in that**
counterpart limbs (38) corresponding to the U limbs (8) are arranged on the steering column trim (2) and have receptacles (39) corresponding to the holding elements (14, 16, 17) arranged on the U limbs (8).

## Revendications

1. Agencement (1) pour le recouvrement de fente d'une fente variable entre une colonne de direction réglable et un tableau de bord d'un véhicule, présentant un revêtement de colonne de direction (2) et un dispositif de recouvrement de fente (3),
le dispositif de recouvrement de fente (3) présentant un dispositif de maintien (4) et un élément de recouvrement de fente souple (6) qui d'une part est fixé de manière amovible par liaison de force au dispositif de maintien (4) et qui d'autre part peut être relié à un élément de fixation, le dispositif de maintien (4) étant fixé de son côté, par l'élément de recouvrement de fente souple (6) relié à celui-ci, de manière amovible par liaison de force, au revêtement de colonne de direction (2), l'élément de recouvrement de fente souple (6) étant conçu comme élément plat rectangulaire, une aile (28) de dispositif de maintien étant agencée sur un côté de celui-ci et une aile de fixation (29) étant agencée à l'opposé de celle-ci, sur l'autre côté, **caractérisé en ce que** des ailes repliables (31) sont agencées sur les côtés libres agencés entre celles-ci.

2. Agencement (1) selon la revendication 1,
**caractérisé en ce que**
le dispositif de maintien (4) est conçu comme cadre en forme de U présentant une entretoise de base (7) et deux branches en U (8) s'étendant à partir de celle-ci avec la même orientation.

3. Agencement (1) selon l'une des revendications précédentes,
**caractérisé en ce que**
le dispositif de maintien (4) est réalisé d'une seule pièce.

4. Agencement (1) selon l'une des revendications précédentes,
**caractérisé en ce que**
le dispositif de maintien (4) présente des éléments de maintien (9, 11, 12, 13, 14, 16, 17) qui sont agencés tant au niveau de l'entretoise de base (7) qu'au niveau des branches en U (8) qui en partent.

5. Agencement (1) selon la revendication 4,
**caractérisé en ce que**
les éléments de maintien (9, 11, 12, 13, 14, 16, 17) sont conçus de manière différente, des paires d'éléments de maintien identiques étant à chaque fois agencées au niveau de l'entretoise de base (7), l'élément de maintien (9, 11, 12, 13) respectif d'une paire d'éléments de maintien étant agencé à la même distance par rapport à une ligne médiane (X) du dispositif de maintien (4).

6. Agencement (1) selon la revendication 4 ou 5,
**caractérisé en ce que**
les éléments de maintien (14, 16, 17) agencés sur les branches en U (8) sont conçus, par rapport à la ligne médiane (X) du dispositif de maintien (4), par paire de manière identique de telle sorte qu'un élément de maintien (14, 16, 17) d'une paire d'éléments de maintien est agencé sur une branche en U (8) et l'autre est agencé au niveau de la branche en U (8) opposée.

7. Agencement (1) selon l'une des revendications précédentes,
**caractérisé en ce que**
l'élément de recouvrement de fente souple (6) présente des évidements (34) conçus de manière correspondante aux éléments de maintien (9, 11, 12, 13, 14, 16, 17) agencés sur le dispositif de maintien (4).

8. Agencement (1) selon la revendication 7,
**caractérisé en ce que**
l'élément de recouvrement de fente souple (6) présente sur son aile (28) de dispositif de maintien des évidements (34) correspondant aux éléments de maintien (9, 11, 12, 13) agencés sur l'entretoise de base (7), les évidements (34) correspondant aux éléments de maintien (14, 16, 17) agencés sur les branches en U (8) étant agencés sur les ailes repliables (31) opposées et des logements (34) destinés à la fixation d'un élément de fixation étant agencés sur l'aile de fixation (29).

9. Agencement (1) selon l'une des revendications 7 à 8,
**caractérisé en ce que**
pour le prémontage du dispositif de recouvrement de fente (3), le dispositif de maintien (4) est placé avec son entretoise de base (7) sous un côté inférieur (33) de l'élément de recouvrement de fente souple (6), en particulier sous son aile (28) de dispositif de maintien de telle sorte que les branches en U (8) s'étendent à partir de l'élément de recouvrement de fente souple (6), les éléments de maintien (9, 11, 12, 13) étant poussés à travers les évidements (34) correspondants et, par pivotement de l'élément de recouvrement de fente souple (6) autour de l'entretoise de base (7), le dispositif de maintien (4) se plaçant au moins partiellement avec ses branches en U (8) entre les ailes repliables (31) sur le côté inférieur (33) de l'élément de recouvrement de fente souple (6), de telle sorte que les ailes repliables (31) sont alors repliées autour de la branche en U (8) respective et fixées de manière amovible sur les éléments de maintien (14, 16, 17), qui sont amenés en prise avec les évidements (34) qui y correspondent.

10. Agencement (1) selon l'une des revendications précédentes,
**caractérisé en ce que**
dans un état prémonté du dispositif de recouvrement de fente (3), l'élément de recouvrement de fente souple (6) est serré sur le dispositif de maintien (4) et ne peut pas se détacher de manière indésirable contre la force de serrage.

11. Agencement (1) selon l'une des revendications précédentes,
**caractérisé en ce que**
des contre-éléments correspondant au dispositif de maintien (4) sont agencés sur le revêtement de colonne de direction (2).

12. Agencement (1) selon la revendication 11,
**caractérisé en ce que**
des logements (37, 39), qui sont conçus de manière correspondante aux éléments de maintien (9, 11, 12, 13, 14, 16, 17) agencés sur le dispositif de maintien (4), sont agencés au niveau des contre-éléments.

13. Agencement (1) selon la revendication 11 ou 12,
**caractérisé en ce que**
le revêtement de colonne de direction (2) présente une contre-entretoise (366) correspondant à l'entretoise de base (7), laquelle contre-entretoise présente des logements (37) correspondant aux éléments de maintien (9, 11, 12, 13) agencés sur l'entretoise de base (7).

14. Agencement (1) selon l'une des revendications 11 à 13,
**caractérisé en ce que**
des contre-branches (38) correspondant aux branches en U (8) sont agencées sur le revêtement de colonne de direction (2), lesquelles contre-branches présentent des logements (39) correspondant aux éléments de maintien (14, 16, 17) agencés sur les branches en U (8).
